# EUROPÄISCHE PATENTSCHRIFT

(11) **EP 3 706 997 B1**
(45) Veröffentlichungstag und Bekanntmachung des Hinweises auf die Patenterteilung: **03.01.2024**
(21) Anmeldenummer: 18793691.9
(22) Anmeldetag: 05.11.2018
(51) Int. Cl.: B32B 17/10

(54) **VERBUNDSCHEIBE MIT FUNKTIONSELEMENT MIT ELEKTRISCH STEUERBAREN OPTISCHEN EIGENSCHAFTEN**
LAMINATED GLASS HAVING A FUNCTIONAL ELEMENT WITH ELECTRICALLY CONTROLLABLE OPTICAL PROPERTIES
VERRE FEUILLETÉ COMPRENANT UN ÉLÉMENT FONCTIONNEL DONT LES PROPRIÉTÉS OPTIQUES SONT CONTRÔLABLES ÉLECTRIQUEMENT

(30) Priorität: 06.11.2017 EP 17200089
(43) Veröffentlichungstag der Anmeldung: 16.09.2020
(73) Patentinhaber: SAINT-GOBAIN GLASS FRANCE, 92400 Courbevoie (FR)
(72) Erfinder: KLEIN, Marcel, 52499 Baesweiler (DE); MANZ, Florian, 52064 Aachen (DE); SCHULZ, Valentin, 52382 Niederzier (DE)
(74) Vertreter: Gebauer, Dieter Edmund
(86) Internationale Anmeldenummer: PCT/EP2018/080127
(87) Internationale Veröffentlichungsnummer: WO 2019/086653

(56) Entgegenhaltungen:
- WO-A1-2009/153593
- WO-A1-2014/029536
- WO-A1-2017/157626
- WO-A1-2018/082920
- DE-A1-102008 017 895
- US-A1- 2008 280 076
- US-A1- 2016 325 528

## Beschreibung

Die Erfindung betrifft eine Verbundscheibe mit einem Funktionselement mit elektrisch steuerbaren optischen Eigenschaften und insbesondere eine Windschutzscheibe mit elektrisch steuerbarer Sonnenblende.

Im Fahrzeugbereich und im Baubereich werden oftmals Verbundscheiben mit elektrisch steuerbaren Funktionselementen zum Sonnenschutz oder zum Sichtschutz eingesetzt.

So sind beispielsweise Windschutzscheiben bekannt, in denen eine Sonnenblende in Form eines Funktionselements mit elektrisch steuerbaren optischen Eigenschaften integriert ist. Dabei ist insbesondere die Transmission oder das Streuverhalten von elektromagnetischer Strahlung im sichtbaren Bereich elektrisch steuerbar. Die Funktionselemente sind in der Regel folienartig und werden in eine Verbundscheibe einlaminiert oder an diese angeklebt. Bei Windschutzscheiben kann der Fahrer das Transmissionsverhalten der Scheibe selbst gegenüber Sonnenstrahlung steuern. So kann auf eine herkömmliche mechanische Sonnenblende verzichtet werden. Dadurch kann das Gewicht des Fahrzeugs reduziert werden und es wird Platz im Dachbereich gewonnen. Zudem ist das elektrische Steuern der Sonnenblende für den Fahrer komfortabler als das manuelle Herunterklappen der mechanischen Sonnenblende.

Windschutzscheiben mit derartigen elektrisch steuerbaren Sonnenblenden sind beispielsweise bekannt aus DE 102013001334 A1, DE 102005049081 B3, DE 102005007427 A1 und DE 102007027296 A1.

Typische elektrisch steuerbare Funktionselemente enthalten elektrochrome Schichtstrukturen oder Suspended Particle Device (SPD)-Folien. Weitere mögliche Funktionselemente zur Realisierung eines elektrisch steuerbaren Sonnenschutzes sind sogenannte PDLC-Funktionselemente (*polymer dispersed liquid crystal*). Deren aktive Schicht enthält Flüssigkristalle, welche in eine Polymermatrix eingelagert sind. Wird keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Das PDLC-Funktionselement wirkt weniger durch Herabsetzung der Gesamttransmission, sondern durch Erhöhung der Streuung, um den Blendschutz zu gewährleisten. Verglasungen mit PDLC-Funktionselementen sind beispielsweise aus der WO 2007/122429 A1, der WO 2014/029536 A1, der US 2017/0090224 A1 und der WO 2017/157626 A1 bekannt. WO2009/153593 zeigt eine Verbundscheibe mit einem elektrooptischen Funktionselement, das eine Randversiegelung aus einer PET-Folie aufweist. US 2016325528 A1 zeigt eine Scheibe mit einer Lichtquelle und einem Streukörper.

Der vorliegenden Erfindung liegt die Aufgabe zugrunde, eine verbesserte Verbundscheibe mit einem Funktionselement mit elektrisch steuerbaren optischen Eigenschaften bereitzustellen. Die Aufgabe der vorliegenden Erfindung wird durch eine Verbundscheibe gemäß dem unabhängigen Anspruch 1 gelöst. Bevorzugte Ausführungen gehen aus den Unteransprüchen hervor.

Eine erfindungsgemäße Verbundscheibe umfasst mindestens:
- eine Stapelfolge aus einer Außenscheibe, einer ersten Zwischenschicht, einer zweiten Zwischenschicht und einer Innenscheibe und
- ein Funktionselement mit elektrisch steuerbaren optischen Eigenschaften, das zumindest abschnittsweise zwischen der ersten Zwischenschicht und der zweiten Zwischenschicht angeordnet ist,
wobei zwischen der Außenscheibe und dem Funktionselement und/oder zwischen dem Funktionselement und der Innenscheibe abschnittsweise mindestens ein transparenter Körper angeordnet ist.

In einer Ausgestaltung der Verbundscheibe, welche nicht Teil der Erfindung ist, enthält der transparente Körper eine transparente Folie, bevorzugt eine transparente polymere Folie oder besteht daraus. Die transparente Folie enthält bevorzugt Polyethylenterephthalat (PET), Ethylenvinylacetat (EVA), Polyvinylbutyral (PVB), Polyurethan (PU), Polyamid, Polyimid oder Polyvinylidenfluorid oder besteht daraus. Derartige Folien sind besonders vorteilhaft, da sie eine hinreichende thermische Beständigkeit aufweisen und bei einem Laminierprozess nicht zerschmelzen und eine ausreichende lokale, kontrollierbare Aufdickung realisierbar ist.

In einer Alternative der erfindungsgemäßen Verbundscheibe enthält der transparente Körper eine transparente Faser (auch Faden oder Monofilament genannt) oder besteht daraus. Als Monofilament wird hier ein vollsynthetischen Faden, der aus einer einzigen Faser besteht, bezeichnet. Die transparente Faser enthält bevorzugt Polyethylenterephthalat (PET), Ethylenvinylacetat (EVA), Polyvinylbutyral (PVB), Polyurethan (PU), Polyamid, Polyimid oder Polyvinylidenfluorid oder besteht daraus. Derartige Fasern sind besonders vorteilhaft, da sie eine hinreichende thermische Beständigkeit aufweisen und bei einem Laminierprozess nicht zerschmelzen und eine ausreichende lokale, kontrollierbare Aufdickung realisierbar ist.

In einer anderen Alternative der erfindungsgemäßen Verbundscheibe enthält der transparente Körper eine im Siebdruck oder 3D-Druck aufgebrachte transparente Schicht oder besteht daraus. Die transparente Schicht enthält bevorzugt Glas, Polymere wie Polyethylenterephthalat (PET), Ethylenvinylacetat (EVA), Polyvinylbutyral (PVB), Polyurethan (PU), Polyamid, Polyimid oder Polyvinylidenfluorid, oder Harze oder besteht daraus.

Transparent bedeutet im Sinne der hier vorliegenden Erfindung mit einer Transmission im Spektrum des sichtbaren Lichts von mehr als 30%, bevorzugt von mehr als 50%, besonders bevorzugt von mehr als 75% und insbesondere von mehr als 85%.

Der transparente Körper kann klar sein oder eine Tönung oder eine Färbung aufweisen, beispielsweise eine Grün-, Blau- oder Rotfärbung.

Der transparente Körper muss ausreichend flach sein (das heißt eine ausreichend geringe Dicke aufweisen), so dass er in das Innere einer Verbundscheibe einlaminiert werden kann. Die Dicke des transparenten Körpers und insbesondere die Dicke der transparenten Folie, des transparenten Faden oder der transparenten Schicht beträgt bevorzugt von 5 µm bis 500 µm, besonders bevorzugt von 25 µm bis 300 µm und insbesondere 25 µm bis 150 µm. Derartig dicke Körper können in Verbundscheiben einlaminiert werden, ohne die Stabilität oder die optischen Eigenschaften der Verbundscheibe zu gefährden oder zu stören.

Besonders vorteilhafte Dicken des transparenten Körpers hängen von dessen Härte ab und können im Rahmen einfacher Experimente durch den Fachmann bestimmt werden. Besonders vorteilhafte transparente Körper, welche nicht Teil der Erfindung sind, bestehen aus einer Polyethylenterephthalat (PET)-Folie mit einer Dicke von größer oder gleich 100 µm, bevorzugt von 100 µm bis 500 µm, besonders bevorzugt von 125 µm bis 500 µm und insbesondere von 150 µm bis 500 µm.

Alternative besonders vorteilhafte transparente Körper, welche nicht Teil der Erfindung sind, bestehen aus einer Polyethylenterephthalat (PET)-Folie mit einer Dicke von größer oder gleich 100 µm, bevorzugt von 100 µm bis 300 µm, besonders bevorzugt von 125 µm bis 300 µm und insbesondere von 150 µm bis 300 µm.

Die Seitenränder des transparenten Körpers sind bevorzugt scharfkantig, das heißt im Wesentlichen orthogonal oder mit einem geringen Krümmungsradius ausgebildet, insbesondere bei Fasern.

Auch hier ist eine Polyethylenterephthalat (PET)-Folie besonders vorteilhaft, aber nicht Teil der Erfindung, da sie im Vergleich zu anderen polymeren Folien sehr formstabil ist und scharfkantig geschnitten werden kann.

Derartige scharfkantige transparente Körper üben in ihrem Kanten- oder Randbereich in einem laminierten Endprodukt wie einer Verbundscheibe einen besonders hohen Druck auf die aktive Schicht des Funktionselements aus und verändern dadurch lokal deren Transmissionsverhalten.

Der erfindungsgemäße transparente Körper ist abschnittsweise zwischen dem Funktionselement und einer der Scheiben (das heißt zwischen dem Funktionselement und der Außenscheibe oder der Innenscheibe) angeordnet. Das bedeutet, dass der transparente Körper vollständig innerhalb des orthogonalen Projektionsbereichs des Funktionselements durch die Verbundscheibe (d.h. durch die Außenscheibe oder die Innenscheibe) angeordnet ist.

Demnach ist der transparente Körper vollständig innerhalb des orthogonalen Projektionsbereichs des Funktionselements durch die Verbundscheibe angeordnet.

Erfindungsgemäß ist der transparente Körper vollständig, das heißt samt aller seiner Seitenränder, innerhalb des Durchsichtbereichs des Funktionselements angeordnet.

In dem erfindungsgemäßen transparenten Körper beträgt die Fläche A des transparenten Körpers kleiner oder gleich von 50%, bevorzugt kleiner oder gleich 25% und insbesondere kleiner oder gleich 10% der Fläche des Funktionselements. Die Fläche A des transparenten Körpers ist dabei die Fläche im Überlappungsbereich mit der Fläche des Funktionselements oder mit anderen Worten, die Fläche im Bereich der orthogonalen Projektion des Funktionselements durch die Verbundscheibe. Die genannten sind jeweils die Bereiche, die parallel oder in der Ebene der Verbundscheibe angeordnet sind oder deren Projektionsflächen auf die Ebene der Verbundscheibe.

In einer weiteren vorteilhaften Ausgestaltung des erfindungsgemäßen transparenten Körpers beträgt die Fläche A des transparenten Körpers im Falle einer transparenten Schicht mindestens 0,01%, bevorzugt mindestens 0,1% und besonders bevorzugt mindestens 1% der Fläche des Funktionselements.

Im Falle eines Faden als transparenten Körper beträgt die Länge des Faden bevorzugt mindestens 5 cm, besonders bevorzugt mindestens 10 cm und insbesondere mindestens 20 cm.

Bevorzugt ist der transparente Körper zwischen dem Funktionselement und der ersten Zwischenschicht und/oder zwischen dem Funktionselement der zweiten Zwischenschicht angeordnet, bevorzugt entweder zwischen dem Funktionselement und der ersten Zwischenschicht oder zwischen dem Funktionselement und der zweiten Zwischenschicht. Besonders bevorzugt ist der transparente Körper zwischen dem Funktionselement und der Scheibe angeordnet, von der in der Regel und bei üblichem Betrieb Licht durch die Verbundscheibe tritt, also bevorzugt der Außenscheibe. Überraschenderweise ist der erfinderische Effekt einer veränderten Transmission und Lichtstreuung in dieser Anordnung besonders ausgeprägt.

Insbesondere ist der transparente Körper unmittelbar benachbart zum Funktionselement angeordnet. Dies ist besonders vorteilhaft für eine transparente Folie oder einen transparenten Faden als transparenten Körper, da diese besonders einfach auf die Zwischenschicht oder das Funktionselement einzulegen sind. Des Weiteren kann sich die erfinderische Wirkung auf das Funktionselement besonders gut entfalten, da die unmittelbaren Druckunterschiede auf das Funktionselement im Kantenbereich des transparenten Körpers besonders groß sind.

Alternativ ist der transparente Körper unmittelbar auf der Innenscheibe oder der Außenscheibe angeordnet. Dies ist besonders vorteilhaft bei transparenten Körpern, die im Siebdruck hergestellt werden, da der Siebdruck besonders gut auf harte Oberflächen aufgedruckt werden kann und anschließend besonders gut auf gläserne Oberflächen eingebrannt werden kann. Der Siebdruck kann aber auch auf dem Funktionselement, der ersten Zwischenschicht, der zweiten Zwischenschichten oder auf anderen Zwischen- oder Trägerschichten aufgebracht werden.

Die Verbundscheibe kann beispielsweise die Windschutzscheibe oder die Dachscheibe eines Fahrzeugs oder eine andere Fahrzeugverglasung sein, beispielsweise eine Trennscheibe in einem Fahrzeug, bevorzugt in einem Schienenfahrzeug, einem Schiff oder einem Bus. Alternativ kann die Verbundscheibe eine Architekturverglasung sein, beispielsweise in einer Außenfassade eines Gebäudes oder eine Trennscheibe im Innern eines Gebäudes.

Die Begriffe Außenscheibe und Innenscheibe beschreiben willkürlich zwei verschiedene Scheiben. Insbesondere kann die Außenscheibe als eine erste Scheibe und die Innenscheibe als eine zweite Scheibe bezeichnet werden.

Ist die Verbundscheibe dafür vorgesehen, in einer Fensteröffnung eines Fahrzeugs oder eines Gebäudes einen Innenraum gegenüber der äußeren Umgebung abzutrennen, so wird mit Innenscheibe im Sinne der Erfindung die dem Innenraum (Fahrzeuginnenraum) zugewandte Scheibe (zweite Scheibe) bezeichnet. Mit Außenscheibe wird die der äußeren Umgebung zugewandte Scheibe (erste Scheibe) bezeichnet. Die Erfindung ist aber darauf nicht eingeschränkt.

Die erfindungsgemäße Verbundscheibe enthält ein Funktionselement mit elektrisch steuerbaren optischen Eigenschaften, das zwischen einer ersten Zwischenschicht und einer zweiten Zwischenschicht zumindest abschnittsweise angeordnet ist. Die erste und zweite Zwischenschicht weisen üblicherweise dieselben Abmessungen wie die Außenscheibe und die Innenscheibe auf. Das Funktionselement ist bevorzugt folienartig.

In einer vorteilhaften Ausgestaltung einer erfindungsgemäßen Verbundscheibe enthält die Zwischenschicht ein Polymer, bevorzugt ein thermoplastisches Polymer.

In einer besonders vorteilhaften Ausgestaltung einer erfindungsgemäßen Verbundscheibe enthält die Zwischenschicht mindestens 3 Gew.-%, bevorzugt mindestens 5 Gew.-%, besonders bevorzugt mindestens 20 Gew.-%, noch mehr bevorzugt mindestens 30 Gew.-% und insbesondere mindestens 40 Gew.-% eines Weichmachers. Der Weichmacher enthält oder besteht bevorzugt aus Triethylenglykol-bis-(2-ethylhexanoat).

Weichmacher sind dabei Chemikalien, die Kunststoffe weicher, flexibler, geschmeidiger und/oder elastischer machen. Sie verschieben den thermoelastischen Bereich von Kunststoffen hin zu niedrigeren Temperaturen, so dass die Kunststoffe im Bereich der Einsatz-Temperatur die gewünschten elastischeren Eigenschaften aufweisen. Weitere bevorzugt Weichmacher sind Carbonsäureester, insbesondere schwerflüchtige Carbonsäureester, Fette, Öle, Weichharze und Campher. Weitere Weichmacher sind bevorzugt aliphatische Diester des Tri- bzw. Tetraethylenglykols. Besonders bevorzugt werden als Weichmacher 3G7, 3G8 oder 4G7 eingesetzt, wobei die erste Ziffer die Anzahl der Ethlenglycoleinheiten und die letzte Ziffer die Anzahl der Kohlenstoffatome im Carbonsäureteil der Verbindung bezeichnet. So steht 3G8 für Triethylenglykol-bis-(2-ethylhexanoat), d.h. für eine Verbindung der Formel C₄H₉CH (CH₂CH₃) CO (OCH₂CH₂)₃O₂CCH(CH₂CH₃)C₄H₉.

In einer weiteren besonders vorteilhaften Ausgestaltung einer erfindungsgemäßen Verbundscheibe enthält die Zwischenschicht mindestens 60 Gew.-%, bevorzugt mindestens 70 Gew.-%, besonders bevorzugt mindestens 90 Gew.-% und insbesondere mindestens 97 Gew.-% Polyvinylbutyral.

Die Dicke jeder Zwischenschicht beträgt bevorzugt von 0,2 mm bis 2 mm, besonders bevorzugt von 0,3 mm bis 1 mm, insbesondere von 0,3 mm bis 0,5 mm, beispielsweise 0,38 mm.

Das steuerbare Funktionselement umfasst typischerweise eine aktive Schicht zwischen zwei Flächenelektroden. Die aktive Schicht weist die steuerbaren optischen Eigenschaften auf, welche über die an die Flächenelektroden angelegte Spannung gesteuert werden können. Die Flächenelektroden und die aktive Schicht sind typischerweise im Wesentlichen parallel zu den Oberflächen der Außenscheibe und der Innenscheibe angeordnet. Die Flächenelektroden sind mit einer externen Spannungsquelle auf an sich bekannte Art elektrisch verbunden. Die elektrische Kontaktierung ist durch geeignete Verbindungskabel, beispielsweise Folienleiter realisiert, welche optional über sogenannte Sammelleiter (bus bars), beispielsweise Streifen eines elektrisch leitfähigen Materials oder elektrisch leitfähige Aufdrucke, mit den Flächenelektroden verbunden sind.

Die Flächenelektroden sind bevorzugt als transparente, elektrisch leitfähige Schichten ausgestaltet. Die Flächenelektroden enthalten bevorzugt zumindest ein Metall, eine Metalllegierung oder ein transparentes leitfähiges Oxid (transparent conducting oxide, TCO). Die Flächenelektroden können beispielsweise Silber, Gold, Kupfer, Nickel, Chrom, Wolfram, Indium-Zinnoxid (ITO), Gallium-dotiertes oder Aluminium-dotiertes Zinkoxid und / oder Fluordotiertes oder Antimon-dotiertes Zinnoxid enthalten. Die Flächenelektroden weisen bevorzugt eine Dicke von 10 nm bis 2 µm auf, besonders bevorzugt von 20 nm bis 1 µm, ganz besonders bevorzugt von 30 nm bis 500 nm.

Erfindungsgemäße Funktionselemente sind oft empfindlich gegenüber einer Diffusion von Weichmachern aus den Zwischenschichten in das Innere des Funktionselements bei Alterung, was zu einer Aufhellung oder Veränderung der Transmission im Randbereich des Funktionselements führen kann und die Durchsicht und Ästhetik der Verbundscheibe beeinträchtigt. Erfindungsgemäße Funktionselemente können beispielsweise Sperrschichten oder Sperrfolien aufweisen, insbesondere an den Seitenflächen beziehungsweise Austrittsflächen der aktiven Schicht.

Das Funktionselement kann außer der aktiven Schicht und den Flächenelektroden weitere an sich bekannte Schichten aufweisen, beispielsweise Barriereschichten, Blockerschichten, Antireflexionsschichten, Schutzschichten und/oder Glättungsschichten.

Das Funktionselement liegt bevorzugt als Mehrschichtfolie mit zwei äußeren Trägerfolien vor. Bei einer solchen Mehrschichtfolie sind die Flächenelektroden und die aktive Schicht zwischen den beiden Trägerfolien angeordnet. Mit äußerer Trägerfolie ist hier gemeint, dass die Trägerfolien die beiden Oberflächen der Mehrschichtfolie ausbilden. Das Funktionselement kann dadurch als laminierte Folie bereitgestellt werden, die vorteilhaft verarbeitet werden kann. Das Funktionselement ist durch die Trägerfolien vorteilhaft vor Beschädigung, insbesondere Korrosion geschützt. Die Mehrschichtfolie enthält in der angegebenen Reihenfolge zumindest eine Trägerfolie, eine Flächenelektrode, eine aktive Schicht, eine weitere Flächenelektrode und eine weitere Trägerfolie. Die Trägerfolie trägt insbesondere die Flächenelektroden und gibt einer flüssigen oder weichen aktiven Schicht die nötige mechanische Stabilität.

Die Trägerfolien enthalten bevorzugt zumindest ein thermoplastisches Polymer, besonders bevorzugt Weichmacher-armes oder Weichmacher-freies Polyethylenterephthalat (PET). Das ist besonders vorteilhaft im Hinblick auf die Stabilität der Mehrschichtfolie. Die Trägerfolien können aber auch andere Polymere, bevorzugt Weichmacher-arme oder Weichmacher-freie Polymere, enthalten oder daraus bestehen, beispielsweise Ethylenvinylacetat (EVA), Polypropylen, Polycarbonat, Polymethylmetacrylat, Polyacrylat, Polyvinylchlorid, Polyacetatharz, Gießharze, Acrylate, Fluorinierte Ethylen-Propylene, Polyvinylfluorid und/oder Ethylen-Tetrafluorethylen. Die Dicke jeder Trägerfolie beträgt bevorzugt von 0,1 mm bis 1 mm, besonders bevorzugt von 0,1 mm bis 0,2 mm.

Typischerweise weisen die Trägerfolien jeweils eine elektrisch leitfähige Beschichtung auf, die der aktiven Schicht zugewandt ist und als Flächenelektrode fungiert.

In einer weiteren vorteilhaften Ausgestaltung einer erfindungsgemäßen Verbundscheibe ist das Funktionselement ein PDLC-Funktionselement (*polymer dispersed liquid crystal*). Die aktive Schicht eines PDLC-Funktionselements enthält Flüssigkristalle, welche in eine Polymermatrix eingelagert sind. Wird an die Flächenelektroden keine Spannung angelegt, so sind die Flüssigkristalle ungeordnet ausgerichtet, was zu einer starken Streuung des durch die aktive Schicht tretenden Lichts führt. Wird an die Flächenelektroden eine Spannung angelegt, so richten sich die Flüssigkristalle in einer gemeinsamen Richtung aus und die Transmission von Licht durch die aktive Schicht wird erhöht. Üblicherweise werden Wechselspannungen im Bereich von 10 V bis 130 V, bevorzugt von 12 V bis 50 V, und mit Frequenzen von 10 Hz bis 60 Hz verwendet.

Grundsätzlich ist es aber auch möglich, andere Arten von steuerbaren Funktionselementen einzusetzen, beispielweise elektrochrome Funktionselemente oder SPD-Funktionselemente (*suspended particle device*). Die erwähnten steuerbaren Funktionselemente und deren Funktionsweise sind dem Fachmann an sich bekannt, so dass an dieser Stelle auf eine ausführliche Beschreibung verzichtet werden kann.

Funktionselemente als Mehrschichtfolien sind kommerziell erhältlich. Das zu integrierende Funktionselement wird typischerweise aus einer Mehrschichtfolie mit größeren Ausmaßen in der gewünschten Form und Größe ausgeschnitten. Dies kann mechanisch erfolgen, beispielsweise mit einem Messer. In einer vorteilhaften Ausführung erfolgt das Ausschneiden mittels eines Lasers. Es hat sich gezeigt, dass die Seitenkante in diesem Fall stabiler ist als beim mechanischen Schneiden. bei mechanisch geschnittenen Seitenkanten kann die Gefahr bestehen, dass sich das Material gleichsam zurückzieht, was optisch auffällig ist und die Ästhetik der Scheibe nachteilig beeinflusst.

Im Rahmen dieser Erfindung werden bei ausgedehnten, flächenhaften Gebilden wie einer Scheibe, einer Zwischenschicht, einem folienartigen Funktionselement oder einem folienartigen transparenten Körper, deren laterale Ausdehnung viel größer ist als ihre Dicke, die Begriffe Seite und Kante synonym verwendet.

Das Funktionselement ist über einen Bereich der ersten Zwischenschicht mit der Außenscheibe und über einen Bereich der zweiten Zwischenschicht mit der Innenscheibe verbunden. Die Zwischenschichten sind bevorzugt flächig aufeinander angeordnet und miteinander laminiert, wobei das Funktionselement zwischen die beiden Schichten eingelegt ist. Die mit dem Funktionselement überlappenden Bereiche der Zwischenschichten bilden dann die Bereiche, welche das Funktionselement mit den Scheiben verbinden. In anderen Bereichen der Scheibe, wo die Zwischenschichten direkten Kontakt zueinander haben, können sie beim Laminieren derart verschmelzen, dass die beiden ursprünglichen Schichten unter Umständen nicht mehr erkennbar sind und stattdessen eine homogene Zwischenschicht vorliegt.

Die Stapelfolge aus zumindest Außenscheibe, erster Zwischenschicht, Funktionselement, zweiter Zwischenschicht und Innenscheibe, sowie dem transparenten Körper, werden in einem Autoklavverfahren, einem Vakuumsackverfahren, einem Vakuumringverfahren, Kalanderverfahren, mittels Vakuumlaminatoren oder Kombinationen davon laminiert, d.h. unter Druck beziehungsweise Vakuum und erhöhter Temperatur dauerhaft miteinander verbunden.

Die Erfindung beruht auf der Erkenntnis der Erfinder, dass erfindungsgemäße transparente Körper die Transparenz und das Streuverhalten von sichtbarem Licht, welches durch das Funktionselement dringt, insbesondere im Randbereich des transparenten Körpers verändern können. Die Veränderung ist in allen Schaltzuständen des Funktionselements erkennbar, insbesondere auch bei "klar"-schalten des Funktionselement, das heißt im Zustand maximaler Transmission beziehungsweise minimaler Streuung.

Ohne sich an eine bestimmte Theorie binden zu wollen, kann dies in einem einfachen Modell erklärt werden: Durch das Einlaminieren eines erfindungsgemäßen transparenten Körpers entsteht ein erhöhter Druck im Bereich des Überlapp mit dem Funktionselement auf dessen aktive Schicht. Dieser Druck wirkt sich im Kanten- oder Randbereich des transparenten Körpers besonders auf die aktive Schicht aus. So findet bei PDLC-Folien eine Deformation der Flüssigkristalltröpfchen in der aktiven Schicht statt, die sich im Wechselfeld der Schaltspannung anders ausrichten als die Flüssigkristalltröpfchen der Umgebung. Dieser Unterschied ergibt sich bei allen Schaltspannungen, so dass die Kontur des transparenten Körpers durch ein verändertes Transmissions- oder Streuverhalten über den gesamten Betriebsbereich des Funktionselements für das menschliche Auge sichtbar bleibt. Gleichzeit kann das Transmissions- oder Streuverhalten derart eingestellt werden, beispielsweise durch eine geeignete Wahl der Dicke des transparenten Körpers, dass die Durchsicht nur unwesentlich beeinträchtigt wird und ein nur dezenter und ästhetischer Eindruck verbleibt.

Eine Zwischenschicht kann beispielsweise durch eine einzige thermoplastische Folie ausgebildet werden. Eine Zwischenschicht kann auch als zweilagiger, dreilagiger oder mehrlagiger Folienstapel ausgebildet sein, wobei die einzelnen Folien gleiche oder unterschiedliche Eigenschaften aufweisen. Eine Zwischenschicht kann auch aus Abschnitten unterschiedlicher thermoplastischer Folien gebildet werden, deren Seitenkanten aneinandergrenzen.

In einer vorteilhaften Weiterbildung einer erfindungsgemäßen Verbundscheibe ist der Bereich der ersten oder der zweiten Zwischenschicht, über den das Funktionselement mit der Außenscheibe beziehungsweise der Innenscheibe verbunden ist, getönt oder gefärbt. Die Transmission dieses Bereichs im sichtbaren Spektralbereich ist also herabgesetzt gegenüber einer nicht getönten oder gefärbten Schicht. Der getönte/gefärbte Bereich der Zwischenschicht erniedrigt somit die Transmission der Windschutzscheibe im Bereich der Sonnenblende. Insbesondere wird der ästhetische Eindruck des Funktionselements verbessert, weil die Tönung zu einem neutraleren Erscheinungsbild führt, das auf den Betrachter angenehmer wirkt.

Unter elektrisch steuerbaren optischen Eigenschaften werden im Sinne der Erfindung solche Eigenschaften verstanden, die stufenlos steuerbar sind, aber gleichermaßen auch solche, die zwischen zwei oder mehr diskreten Zuständen geschaltet werden können.

Die elektrische Steuerung der Sonnenblende erfolgt beispielsweise mittels Schaltern, Dreh- oder Schiebereglern, die in den Armaturen des Fahrzeugs integriert sind. Es kann aber auch eine Schaltfläche zur Reglung der Sonnenblende in die Windschutzscheibe integriert sein, beispielsweise eine kapazitive Schaltfläche. Alternativ oder zusätzlich kann die Sonnenblende durch kontaktfreie Verfahren, beispielsweise durch das Erkennen von Gesten, oder in Abhängigkeit des durch eine Kamera und geeignete Auswerteelektronik festgestellten Zustands von Pupille oder Augenlid gesteuert werden. Alternativ oder zusätzlich kann die die Sonnenblende durch Sensoren, welchen einen Lichteinfall auf die Scheibe detektieren, gesteuert werden.

Der getönte oder gefärbte Bereich der Zwischenschicht weist bevorzugt eine Transmission im sichtbaren Spektralbereich von 10 % bis 50 % auf, besonders bevorzugt von 20% bis 40%. Damit werden besonders gute Ergebnisse erreicht hinsichtlich Blendschutz und optischem Erscheinungsbild.

Die Zwischenschicht kann durch eine einzelne thermoplastische Folie ausgebildet werden, in der der getönte oder gefärbte Bereich durch lokales Tönen oder Färben erzeugt wird. Solche Folien sind beispielsweise durch Koextrusion erhältlich. Alternativ können ein ungetönter Folienabschnitt und ein getönter oder gefärbter Folienabschnitt zur thermoplastischen Schicht zusammengesetzt werden.

Der getönte oder gefärbte Bereich kann homogen gefärbt oder getönt sein, das heißt eine ortsunabhängige Transmission aufweisen. Die Tönung oder Färbung kann aber auch inhomogenen sein, insbesondere kann ein Transmissionsverlauf realisiert sein. In einer Ausgestaltung nimmt der Transmissionsgrad im getönten oder gefärbten Bereich zumindest abschnittsweise mit steigendem Abstand zur Oberkante ab. So können scharfe Kanten des getönten oder gefärbten Bereichs vermieden werden, so dass der Übergang von der Sonnenblende in den transparenten Bereich der Windschutzscheibe graduell verläuft, was ästhetisch ansprechender aussieht.

In einer vorteilhaften Ausgestaltung ist der Bereich der ersten Zwischenschicht, also der Bereich zwischen dem Funktionselement und der Außenscheibe getönt. Dies bewirkt einen besonders ästhetischen Eindruck auf Draufsicht auf die Außenscheibe. Der Bereich der zweiten Zwischenschicht zwischen Funktionselement und Innenscheibe kann optional zusätzlich gefärbt oder getönt sein.

Die Verbundscheibe mit elektrisch steuerbarem Funktionselement kann vorteilhafterweise als Windschutzscheibe mit elektrisch steuerbarer Sonnenblende ausgebildet sein.

Eine solche Windschutzscheibe weist eine Oberkante und eine Unterkante auf sowie zwei zwischen Oberkante und Unterkante verlaufende Seitenkanten auf. Mit Oberkante wird diejenige Kante bezeichnet, welche dafür vorgesehen ist, in Einbaulage nach oben zu weisen. Mit Unterkante wird diejenige Kante bezeichnet, welche dafür vorgesehen ist, in Einbaulage nach unten zu weisen. Die Oberkante wird häufig auch als Dachkante und die Unterkante als Motorkante bezeichnet.

Windschutzscheiben weisen ein zentrales Sichtfeld auf, an dessen optische Qualität hohe Anforderungen gestellt werden. Das zentrale Sichtfeld muss eine hohe Lichttransmission aufweisen (typischerweise größer als 70%). Das besagte zentrale Sichtfeld ist insbesondere dasjenige Sichtfeld, das vom Fachmann als Sichtfeld B, Sichtbereich B oder Zone B bezeichnet wird. Das Sichtfeld B und seine technischen Anforderungen sind in der Steuerung Nr. 43 der Wirtschaftskommission der Vereinten Nationen für Europa (UN/ECE) (ECE-R43, "Einheitliche Bedingungen für die Genehmigung der Sicherheitsverglasungswerkstoffe und ihres Einbaus in Fahrzeuge") festgelegt. Dort ist das Sichtfeld B in Anhang 18 definiert.

Das Funktionselement ist dann vorteilhafterweise oberhalb des zentralen Sichtfelds (Sichtfeld B) angeordnet. Das bedeutet, dass das Funktionselement im Bereich zwischen dem zentralen Sichtfeld und der Oberkante der Windschutzscheibe angeordnet ist. Das Funktionselement muss nicht den gesamten Bereich abdecken, ist aber vollständig innerhalb dieses Bereichs positioniert und ragt nicht in das zentrale Sichtfeld hinein. Anders ausgedrückt weist das Funktionselement einen geringeren Abstand zur Oberkante der Windschutzscheibe auf als der zentrale Sichtbereich. Somit wird die Transmission des zentralen Sichtfelds nicht durch das Funktionselement beeinträchtigt, welches an einer ähnlichen Stelle positioniert ist wie eine klassische mechanische Sonnenblende im heruntergeklappten Zustand.

Die Windschutzscheibe ist bevorzugt für ein Kraftfahrzeug vorgesehen, besonders bevorzugt für einen Personenkraftwagen.

In einer bevorzugten Ausgestaltung ist das Funktionselement, genauer die Seitenkanten des Funktionselements umlaufend von einer dritten Zwischenschicht umgeben. Die dritte Zwischenschicht ist rahmenartig ausgebildet mit einer Aussparung, in welche das Funktionselement eingelegt wird. Die dritte Zwischenschicht kann ebenfalls durch eine thermoplastische Folie gebildet werden, in welche die Aussparung durch Ausschneiden eingebracht worden ist. Alternativ kann die dritte Zwischenschicht auch aus mehreren Folienabschnitten um das Funktionselement zusammengesetzt werden. Die Zwischenschicht ist bevorzugt aus insgesamt mindestens drei flächig aufeinander angeordneten thermoplastischen Schichten gebildet, wobei die mittlere Schicht eine Aussparung ausweist, in der das Funktionselement angeordnet ist. Bei der Herstellung wird die dritte Zwischenschicht zwischen der ersten und der zweiten Zwischenschicht angeordnet, wobei die Seitenkanten aller Zwischenschichten bevorzugt in Deckung angeordnet sind. Die dritte Zwischenschicht weist bevorzugt etwa die gleiche Dicke auf wie das Funktionselement.

Dadurch wird der lokale Dickenunterschied der Windschutzscheibe, der durch das örtlich begrenzte Funktionselement eingebracht wird, kompensiert, so dass Glasbruch beim Laminieren vermieden werden kann.

Die in Durchsicht durch die Windschutzscheibe sichtbaren Seitenkanten des Funktionselements sind bevorzugt bündig mit der dritten Zwischenschicht angeordnet, so dass zwischen der Seitenkante des Funktionselements und der zugeordneten Seitenkante der Zwischenschicht keine Lücke existiert. Das gilt insbesondere für die Unterkante des Funktionselements, die typischerweise sichtbar ist. So ist die Grenze zwischen dritter Zwischenschicht und Funktionselement optisch unauffälliger.

In einer bevorzugten Ausgestaltung sind die Unterkanten des Funktionselements und des getönten Bereichs der Zwischenschicht(en) an die Form der Oberkante der Windschutzscheibe angepasst, was ein optisch ansprechenderes Erscheinungsbild bewirkt. Da die Oberkante einer Windschutzscheibe typischerweise gebogen ist, insbesondere konkav gebogen, ist auch die Unterkante des Funktionselements und des getönten Bereichs bevorzugt gebogen ausgestalten. Besonders bevorzugt sind die Unterkanten des Funktionselements im Wesentlichen parallel zur Oberkante der Windschutzscheibe ausgebildet. Es ist aber auch möglich, die Sonnenblende aus zwei jeweils geraden Hälften aufzubauen, die in einem Winkel zueinander angeordnet sind und der Form der Oberkante v-förmig angenähert sind.

In einer Ausgestaltung der Erfindung ist das Funktionselement durch Isolierungslinien in Segmente aufgeteilt. Die Isolierungslinien sind insbesondere in die Flächenelektroden eingebracht sein, so dass die Segmente der Flächenelektrode elektrisch voneinander isoliert sind. Die einzelnen Segmente sind unabhängig voneinander mit der Spannungsquelle verbunden, so dass sie separat angesteuert werden können. So können verschiedene Bereich der Sonnenblende unabhängig geschaltet werden. Besonders bevorzugt sind die Isolierungslinien und die Segmente in Einbaulage horizontal angeordnet. Damit kann die Höhe der Sonnenblende vom Benutzer gesteuert werden. Der Begriff "horizontal" ist hier breit auszulegen und bezeichnet eine Ausbreitungsrichtung, die bei einer Windschutzscheibe zwischen den Seitenkanten der Windschutzscheibe verläuft. Die Isolierungslinien müssen nicht notwendigerweise gerade sein, sondern können auch leicht gebogen sein, bevorzugt angepasst an eine eventuelle Biegung der Oberkante der Windschutzscheibe, insbesondere im Wesentlichen parallel zur Oberkante der Windschutzscheibe. Vertikale Isolierungslinien sind natürlich auch denkbar.

Die Isolierungslinien weisen beispielsweise eine Breite von 5 µm bis 500 µm, insbesondere 20 µm bis 200 µm auf. Die Breite der Segmente, also der Abstand benachbarten Isolierungslinien kann vom Fachmann gemäß den Anforderungen im Einzelfall geeignet gewählt werden.

Die Isolierungslinien können durch Laserablation, mechanisches Schneiden oder Ätzen während der Herstellung des Funktionselements eingebracht werden. Bereits laminierte Mehrschichtfolien können auch nachträglich noch mittels Laserablation segmentiert werden.

Die Oberkante und die Seitenkanten oder alle Seitenkanten des Funktionselements werden in Durchsicht durch die Verbundscheibe bevorzugt von einem opaken Abdeckdruck oder durch einen äußeren Rahmen verdeckt. Windschutzscheiben weisen typischerweise einen umlaufenden peripheren Abdeckdruck aus einer opaken Emaille auf, der insbesondere dazu dient, den zum Einbau der Windschutzscheibe verwendete Kleber vor UV-Strahlung zu schützen und optisch zu verdecken. Dieser periphere Abdeckdruck wird bevorzugt dazu verwendet, auch die Oberkante und die Seitenkante des Funktionselements zu verdecken, sowie die erforderlichen elektrischen Anschlüsse. Die Sonnenblende ist dann vorteilhaft ins Erscheinungsbild der Windschutzscheibe integriert und lediglich die Unterkante ist potentiell vom Betrachter zu erkennen. Bevorzugt weist sowohl die Außenscheibe als auch die Innenscheibe einen Abdeckdruck auf, so dass die Durchsicht von beiden Seiten gehindert wird.

Das Funktionselement kann auch Aussparungen oder Löcher aufweisen, etwa im Bereich sogenannter Sensorfenster oder Kamerafenster. Diese Bereiche sind dafür vorgesehen, mit Sensoren oder Kameras ausgestattet zu werden, deren Funktion durch ein steuerbares Funktionselement im Strahlengang beeinträchtigt werden würde, beispielsweise Regensensoren. Es ist auch möglich, die Sonnenblende mit mindestens zwei voneinander getrennten Funktionselementen zu realisieren, wobei zwischen den Funktionselementen ein Abstand besteht, der einen Raum für Sensor- oder Kamerafenster bereitstellt.

Das Funktionselement (oder die Gesamtheit der Funktionselemente im vorstehend beschriebenen Fall von mehreren Funktionselementen) ist bevorzugt über die gesamte Breite der Verbundscheibe beziehungsweise der Windschutzscheibe angeordnet, abzüglich eines beidseitigen Randbereichs mit einer Breite von beispielsweise 2 mm bis 20 mm. Auch zur Oberkante weist das Funktionselement bevorzugt einen Abstand von beispielsweise 2 mm bis 20 mm auf. Das Funktionselement ist so innerhalb der Zwischenschicht eingekapselt und vor Kontakt mit der umgebenden Atmosphäre und Korrosion geschützt.

Die Außenscheibe und die Innenscheibe sind bevorzugt aus Glas gefertigt, besonders bevorzugt aus Kalk-Natron-Glas, wie es für Fensterscheiben üblich ist. Die Scheiben können aber auch aus anderen Glassorten gefertigt sein, beispielsweise Quarzglas, Borosilikatglas oder Alumino-Sililat-Glas, oder aus starren klaren Kunststoffen, beispielsweise Polycarbonat oder Polymethylmethacrylat. Die Scheiben können klar sind, oder auch getönt oder gefärbt. Windschutzscheiben müssen dabei im zentralen Sichtbereich eine ausreichende Lichttransmission aufweisen, bevorzugt mindestens 70 % im Haupt-Durchsichtbereich A gemäß ECE-R43.

Die Außenscheibe, die Innenscheibe und/oder die Zwischenschicht können weitere geeignete, an sich bekannte Beschichtungen aufweisen, beispielsweise Antireflexbeschichtungen, Antihaftbeschichtungen, Antikratzbeschichtungen, photokatalytische Beschichtungen oder Sonnenschutzbeschichtungen oder Low-E-Beschichtungen).

Die Dicke der Außenscheibe und der Innenscheibe kann breit variieren und so den Erfordernissen im Einzelfall angepasst werden. Die Außenscheibe und die Innenscheibe weisen bevorzugt Dicken von 0,5 mm bis 5 mm auf, besonders bevorzugt von 1 mm bis 3 mm.

Die Erfindung umfasst außerdem ein Verfahren zur Herstellung einer erfindungsgemäßen Verbundscheibe, wobei zumindest
a) eine Außenscheibe, eine erste Zwischenschicht, ein Funktionselement mit elektrisch steuerbaren optischen Eigenschaften, eine zweite Zwischenschicht und eine Innenscheibe in dieser Reihenfolge übereinander angeordnet werden, wobei zwischen Außenscheibe und erster Zwischenschicht, zwischen erster Zwischenschicht und Funktionselement, zwischen Funktionselement und zweiter Zwischenschicht und/oder zwischen zweiter Zwischenschicht und Innenscheibe mindestens ein transparenter Körper angeordnet wird,
b) die Außenscheibe und die Innenscheibe durch Lamination verbunden werden.

Das Laminieren erfolgt bevorzugt unter Einwirkung von Hitze, Vakuum und/oder Druck. Es können an sich bekannte Verfahren zur Lamination verwendet werden, beispielsweise Autoklavverfahren, Vakuumsackverfahren, Vakuumringverfahren, Kalanderverfahren, Vakuumlaminatoren oder Kombinationen davon.

Die elektrische Kontaktierung der Flächenelektroden des Funktionselements erfolgt bevorzugt vor dem Laminieren der Verbundscheibe.

Eventuell vorhandene Drucke, beispielsweise opake Abdeckdrucke oder aufgedruckte Sammelleiter zur elektrischen Kontaktierung des Funktionselements werden bevorzugt im Siebdruckverfahren aufgebracht.

Ein großer Vorteil der Erfindung besteht bei Verbundscheiben als Windschutzscheibe darin, dass auf eine klassische am Fahrzeugdach montierte, mechanisch klappbare Sonnenblende verzichtet werden kann.

Ein weiterer Aspekt der Erfindung umfasst die Verwendung eines erfindungsgemäßen transparenten Körpers in einer erfindungsgemäßen Verbundscheibe zur Beschriftung, zur Markierung oder zur symbolhaften Anzeige einer Funktion oder einer Position innerhalb der Verbundscheibe.

Die Erfindung wird anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein. Es zeigen:
Figur 1A eine Draufsicht auf eine erste Ausgestaltung einer Verbundscheibe,
Figur 1B einen Querschnitt durch die Verbundscheibe aus Figur 1A entlang der Schnittlinie X-X',
Figur 1C einen vergrößerten Querschnitt des Bereichs Z durch die Verbundscheibe aus Figur 1B,
Figur 2A-D eine Durchsicht durch die Verbundscheibe aus Figur 1A bei verschiedenen Betriebszuständen des Funktionselements,
Figur 3A-D eine Durchsicht durch eine alternative Verbundscheibe nach Figur 1A bei verschiedenen Betriebszuständen des Funktionselements,
Figur 4A eine Draufsicht auf einer erfindungsgemäßen Verbundscheibe als Windschutzscheibe mit Sonnenblende,
Figur 4B einen Querschnitt durch die Verbundscheibe aus Figur 4A entlang der Schnittlinie X-X',
Figur 5A eine Draufsicht auf einen alternativen erfindungsgemäßen Verbundscheibe als Windschutzscheibe mit Sonnenblende,
Figur 5B einen Querschnitt durch die Verbundscheibe aus Figur 5A entlang der Schnittlinie X-X` und
Figur 6 eine Draufsicht auf eine weitere Ausgestaltung einer erfindungsgemäßen Verbundscheibe als Windschutzscheibe mit segmentierter Sonnenblende.

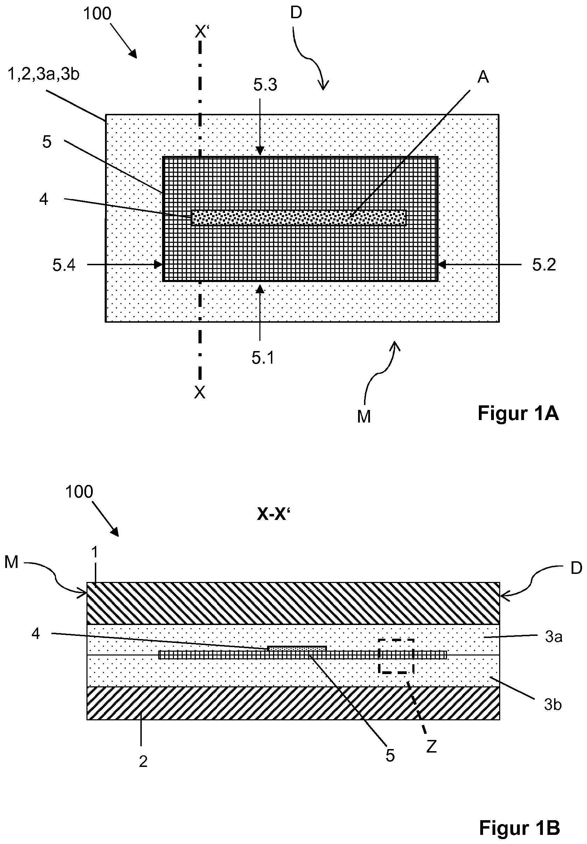

Figuren 1A-C, 2A-D und 3A-D sind nicht erfindungsgemäß und dienen nur der Veranschaulichung.

Figur 1A zeigt eine Draufsicht auf eine Verbundscheibe 100 und Figur 1B einen Querschnitt entlang der Schnittlinie X-X` aus Figur 1A. Die Verbundscheibe 100 umfasst eine Außenscheibe 1 und eine Innenscheibe 2, die über eine erste Zwischenschicht 3a und eine zweite Zwischenschicht 3b miteinander verbunden sind. Die Außenscheibe 1 weist eine Dicke von 2,1 mm auf und besteht beispielsweise aus einem klaren Kalk-Natron-Glas. Die Innenscheibe 2 weist eine Dicke von 1,6 mm auf und besteht beispielsweise ebenfalls aus einem klaren Kalk-Natron-Glas. Die Verbundscheibe 100 weist eine mit D bezeichnete erste Kante auf, die im Folgenden Oberkante genannt wird. Die Verbundscheibe 100 weist eine mit M bezeichnete zweite Kante auf, die der Oberkante D gegenüber angeordnet ist und im Folgenden Unterkante genannt wird. Die Verbundscheibe 100 kann beispielsweise als Architekturverglasung in den Rahmen eines Fensters mit weiteren Scheiben zu einer Isolierverglasung angeordnet sein.

Zwischen der ersten Zwischenschicht 3a und der zweiten Zwischenschicht 3b ist ein Funktionselement 5 angeordnet, welches durch eine elektrische Spannung in seinen optischen Eigenschaften steuerbar ist. Die elektrischen Zuleitungen sind der Einfachheit halber nicht dargestellt.

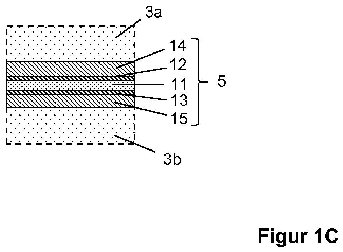

Figur 1C zeigt einen vergrößerten Querschnitt des Ausschnitts Z aus Figur 1B. Das steuerbare Funktionselement 5 ist beispielsweise eine PDLC-Mehrschichtfolie, bestehend aus einer aktiven Schicht 11 zwischen zwei Flächenelektroden 12, 13 und zwei Trägerfolien 14, 15. Die aktive Schicht 11 enthält eine Polymermatrix mit darin dispergierten Flüssigkristallen, die sich in Abhängigkeit der an die Flächenelektroden angelegten elektrischen Spannung ausrichten, wodurch die optischen Eigenschaften gesteuert werden können. Die Trägerfolien 14, 15 bestehen aus PET und weisen eine Dicke von beispielsweise 0,125 mm auf. Die Trägerfolien 14, 15 sind mit einer zur aktiven Schicht 11 weisenden Beschichtung aus ITO mit einer Dicke von etwa 100 nm versehen, welche die Flächenelektroden 12, 13 ausbilden. Die Flächenelektroden 12, 13 sind über nicht dargestellte Sammelleiter (beispielweise ausgebildet durch einen silberhaltigen Siebdruck) und nicht dargestellte Verbindungskabel mit der Bordelektrik verbindbar.

Die Zwischenschichten 3a, 3b umfassen jeweils eine thermoplastische Folie mit einer Dicke von 0,38 mm. Die Zwischenschichten 3a, 3b bestehen beispielsweise aus 78 Gew.-% Polyvinylbutyral (PVB) und 20 Gew.-% Triethylene glycol bis(2-ethylhexanoate) als Weichmacher.

Zwischen der ersten Zwischenschicht 3a und dem Funktionselement 5 ist ein transparenter Körper 4 angeordnet. Der transparente Körper 4 besteht beispielsweise aus einer klaren, transparenten Polymerfolie und beispielsweise aus einer PET-Folie mit einer Dicke von 125 µm. Die Abmessungen (Fläche A) des transparenten Körpers 4 in Durchsichtrichtung sind deutlich kleiner als die Abmessungen (Fläche) des Funktionselements 5 in Durchsichtrichtung.

Das Funktionselement 5 kann besondere Mittel aufweisen, die die Seitenkanten 5.1, 5.2, 5.3, 5.4 versiegeln, beispielsweise eine hier nicht dargestellte Sperrfolie, die die Diffusion von Weichmacher aus den Zwischenschichten 3a,3b in das Innere der PDLC-Folie verhindern.

Die folgende Tabelle 1 gibt Versuchsergebnisse für transparente Körper 4 aus PET-Folien mit unterschiedlichen Dicken (12,5 µm, 25 µm, 50 µm, 125 mm wieder. Beurteilt wurden die veränderten Transmissionseigenschaften im Randbereich des transparenten Körpers 4 im ON-Zustand, das heißt bei maximaler Transparenz und Klarheit der PDLC-Folie. Die veränderten Transmissionseigenschaften wurden anhand des optischen Eindruck durch einen Betrachter mit menschlichem Auge in Durchsicht beurteilt.

**Tabelle 1**

| Material des transparenten Körpers 4 | Dicke des transparenten Körpers 4 | veränderte Transmissionseiqenschaften im Randbereich des transparenten Körpers 4 |
|---|---|---|
| PET-Folie | 12,5 µm | nicht erkennbar |
| PET-Folie | 25 µm | nicht/kaum erkennbar |
| PET-Folie | 50 µm | schwach erkennbar |
| PET-Folie | 125 µm | gut erkennbar/deutlich ausgeprägt |

Für transparente Körper 4 aus PET-Folien mit einer Dicke von 125 µm konnten besonders gut erkennbare Veränderungen der Transmissionseigenschaften festgestellt werden.

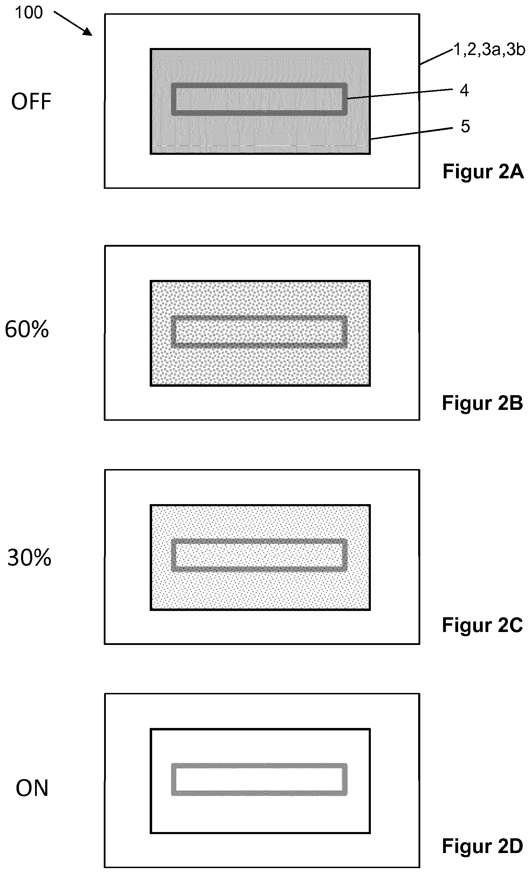

Figur 2A-D zeigen eine schematische Darstellung der Durchsicht durch die Verbundscheibe 100 aus den Figuren 1A-C bei verschiedenen Betriebszuständen des Funktionselements 5.

Figur 2A zeigt die Durschicht beim OFF-Zustand des Funktionselements 5. OFF-Zustand bedeutet, dass bei der verwendeten PDLC-Folie keine Spannung an der PDLC-Folie anliegt und die PDLC-Folie eine maximale Streuung des hindurchtretenden Lichts bewirkt. Die Durchsicht ist über das gesamte Funktionselement 5 trüb und Licht von dahinterliegenden Objekten oder Lichtquellen wird gestreut und in seiner Intensität gemindert. Insbesondere dahinterliegende Objekte sind für das menschliche Auge nicht erkennbar.

Der transparente Körper 4 am Beispiel der PET-Folie ist in seinem Inneren für das menschliche Auge nicht oder nicht wesentlich von der Durchsicht durch das Funktionselement 5 in der Umgebung des transparenten Körpers 4 zu unterscheiden. Lediglich in einem schmalen Bereich um den Rand des transparenten Körpers 4 findet eine veränderte Streuung statt, so dass die Kontur des transparenten Körpers 4 für das menschliche Auge gut und deutlich zu erkennen ist. Dieser Effekt bleibt erhalten, wenn eine elektrische Wechselspannung an die PDLC-Folie angelegt wird und die PDLC-Folie auf zunehmende Transparenz und Klarheit geschaltet wird, siehe Figur 2B mit 60% Reststreuung und Figur 2C mit 30% Reststreuung.

Auch im ON-Zustand, das heißt bei maximaler Transparenz und Klarheit der PDLC-Folie, ist die Kontur des transparenten Körpers 4 durch ein verändertes Transmissionsverhalten der PDLC-Folie noch zu erkennen.

Durch den Körper 4 können in einfacher Weise dezente aber gleichzeitig dauerhafte Positionsmarkierungen, Schriftzüge oder andere Markierungen in die Verbundscheibe 100 eingebracht werden.

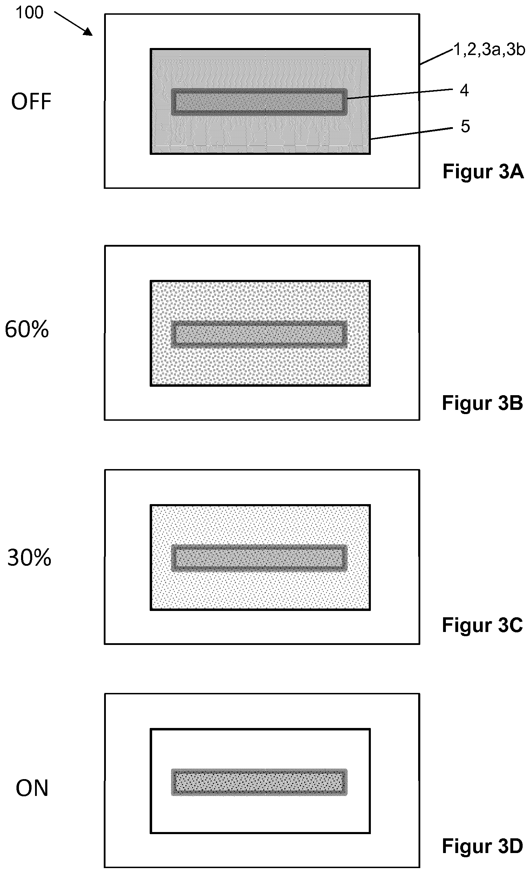

Figur 3A-D zeigen die Durchsicht durch eine alternative Verbundscheibe 100 bei verschiedenen Betriebszuständen des Funktionselements 5. Die alternative erfindungsgemäße Verbundscheibe 100 entspricht im Wesentlichen der Verbundscheibe 100 aus Figur 1A, so dass im Folgenden nur auf die Unterschiede eingegangen wird.

In der alternativen Verbundscheibe 100 ist der transparente Körper 4 eine leicht getönte, das heißt beispielsweise grün eingefärbte Polyimid-Folie mit einer Dicke von beispielsweise 50 µm.

Die eingefärbte Folie beeinflusst die Streuung durch das Funktionselement 5 (hier beispielsweise eine PDLC-Folie) nicht, sondern gibt nur dem Licht in Transmission einen grünen Farbton. Die Kontur des transparenten Körpers 4 ist entsprechend den Figuren 2A-D dezent durch ein verändertes Streuverhalten zu erkennen.

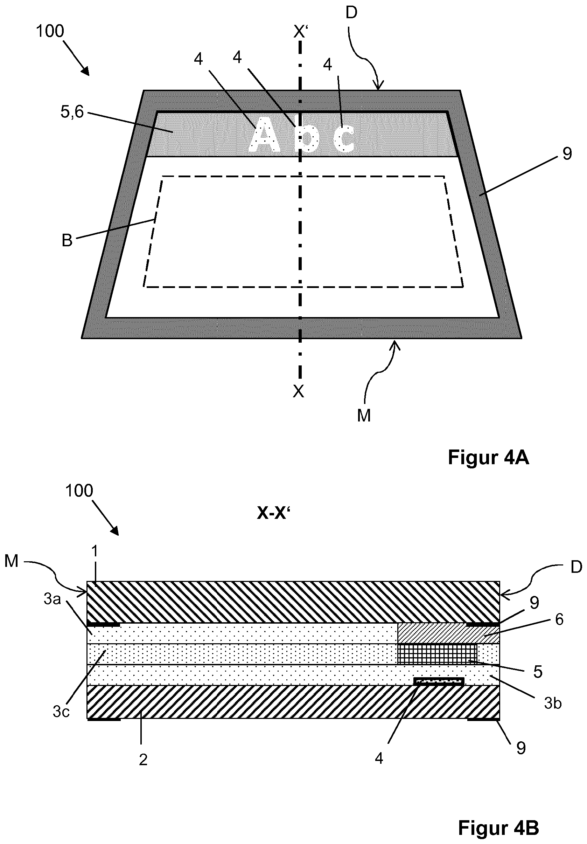

Figur 4A und Figur 4B zeigen je ein Detail einer erfindungsgemäßen Verbundscheibe 100 als Windschutzscheibe mit elektrisch steuerbarer Sonnenblende. Die Verbundscheibe 100 aus Figur 4A und 4B entspricht im Wesentlichen, der Verbundscheibe 100 aus den Figuren 1A und 1B, so dass im Folgenden nur auf die Unterschiede eingegangen wird.

Die Windschutzscheibe umfasst eine trapezförmige Verbundscheibe 100 mit einer Außenscheibe 1 und einer Innenscheibe 2, die über zwei Zwischenschichten 3a,3b miteinander verbunden sind. Die Außenscheibe 1 weist eine Dicke von 2,1 mm auf und besteht aus einem grün eingefärbten Kalk-Natron-Glas. Die Innenscheibe 2 weist eine Dicke von 1,6 mm auf und besteht aus einem klaren Kalk-Natron-Glas. Die Windschutzscheibe weist eine in Einbaulage dem Dach zugewandte Oberkante D und eine in Einbaulage dem Motorraum zugewandte Unterkanten M auf.

Die Windschutzscheibe ist mit einem elektrisch regelbaren Funktionselement 5 als Sonnenblende ausgestattet, das in einem Bereich oberhalb des zentralen Sichtbereichs B (wie in ECE-R43 definiert) angeordnet ist. Die Sonnenblende ist durch eine kommerzielle erhältliche PDLC-Mehrschichtfolie als Funktionselement 5 gebildet, die in die Zwischenschichten 3a,3b eingelagert ist. Die Höhe der Sonnenblende beträgt beispielsweise 21 cm. Die erste Zwischenschicht 3a ist mit der Außenscheibe 1 verbunden, die zweite Zwischenschicht 3b ist mit der Innenscheibe 2 verbunden. Eine dazwischenliegende dritte Zwischenschicht 3c weist einen Ausschnitt auf, in welchen die zugeschnittene PDLC-Mehrschichtfolie passgenau, das heißt an allen Seiten bündig, eingelegt ist. Die dritte Zwischenschicht 3c Schicht bildet also gleichsam eine Art Passepartout für das Funktionselement 5, welches somit rundum in thermoplastisches Material eingekapselt und dadurch geschützt ist.

Die erste Zwischenschicht 3a weist einen getönten Bereich 6 auf, der zwischen dem Funktionselement 5 und der Außenscheibe 1 angeordnet ist. Die Lichttransmission der Windschutzscheibe wird dadurch im Bereich des Funktionselements 5 zusätzlich herabgesetzt und das milchige Aussehen des PDLC-Funktionselements 5 im diffusiven Zustand abgemildert. Die Ästhetik der Windschutzscheibe wird dadurch deutlich ansprechender gestaltet. Die erste Zwischenschicht 3a weist im Bereich 6 beispielsweise eine durchschnittliche Lichttransmission von 30% auf, womit gute Ergebnisse erzielt werden.

Der Bereich 6 kann homogen getönt sein. Oft ist es jedoch optisch ansprechender, wenn die Tönung in Richtung der Unterkante des Funktionselements 5 geringer wird, so dass der getönte und der ungetönte Bereich fließend ineinander übergehen.

Im dargestellten Fall sind die Unterkanten des getönten Bereichs 6 und die Unterkante des PDLC-Funktionselements 5 (hier deren Seitenkante 5.1) zueindander bündig angeordnet. Dies ist aber nicht notwendigerweise der Fall. Es ist ebenso möglich, dass der getönte Bereich 6 über das Funktionselement 5 übersteht oder dass umgekehrt das Funktionselement 5 über den getönten Bereich 6 übersteht. Im letztgenannten Fall wäre nicht das gesamte Funktionselement 5 über den getönten Bereich 6 mit der Außenscheibe 1 verbunden.

Das regelbare Funktionselement 5 ist eine Mehrschichtfolie, bestehend aus einer aktiven Schicht 11 zwischen zwei Flächenelektroden 12, 13 und zwei Trägerfolien 14, 15. Die aktive Schicht 11 enthält eine Polymermatrix mit darin dispergierten Flüssigkristallen, die sich in Abhängigkeit der an die Flächenelektroden angelegten elektrischen Spannung ausrichten, wodurch die optischen Eigenschaften geregelt werden können. Die Trägerfolien 14, 15 bestehen aus PET und weisen eine Dicke von beispielsweise 0,125 mm auf. Die Trägerfolien 14, 15 sind mit einer zur aktiven Schicht 11 weisenden Beschichtung aus ITO mit einer Dicke von etwa 100 nm versehen, welche die Elektroden 12, 13 ausbilden. Die Elektroden 12, 13 sind über nicht dargestellte Sammelleiter (beispielweise ausgebildet durch einen silberhaltigen Siebdruck) und nicht dargestellte Verbindungskabel mit der Bordelektrik verbindbar.

Die Windschutzscheibe weist, wie üblich, einen umlaufenden peripheren Abdeckdruck 9 auf, der durch eine opake Emaille auf den innenraumseitigen Oberflächen (in Einbaulage dem Innenraum des Fahrzeugs zugewandt) der Außenscheibe 1 und der Innenscheibe 2 ausgebildet ist. Der Abstand des Funktionselements 5 zur Oberkante D und den Seitenkanten der Windschutzscheibe ist kleiner als die Breite des Abdeckdrucks 9, so dass die Seitenkanten des Funktionselements 5 - mit Ausnahme der zum zentralen Sichtfeld B weisenden Seitenkante - durch den Abdeckdruck 9 verdeckt sind. Auch die nicht dargestellten elektrischen Anschlüsse werden sinnvollerweise im Bereich des Abdeckdrucks 9 angebracht und somit versteckt.

Der transparente Körper 4 ist in diesem Beispiel zwischen der Innenscheibe 2 und der zweiten Zwischenschicht 3b angeordnet. Der transparente Körper 4 ist hier auf die Oberfläche der Innenscheibe 2 mit einem Siebdruckverfahren aufgedruckt und besteht aus Glasfritten, die auf die Innenscheibe 2 eingebrannt wurden. Das heißt, die Glasfritten (aus einem Glas, dessen Schmelzpunkt niedriger ist, als der der Innenscheibe 2) wurden mit einem organischen Bindemittel auf die Innenscheibe 2 gedruckt; anschließend wurde die Innenscheibe 2 samt Glasfritten über den Erweichungspunkt der Glasfritten erwärmt und die Glasfritten geschmolzen. Nach dem Abkühlen ist eine dauerhaft feste Verbindung zwischen den aufgedruckten Glasfritten und der Scheibenoberfläche entstanden. Derartige transparente Körper 4 aus Glas haben den besonderen Vorteil, dass sie sehr hart sind und einen entsprechend großen Druckunterschied in ihrem Randbereich auf das Funktionselement 5 ausüben.

Der transparente Körper 4 hat hier beispielsweise die Form der Buchstaben "A b c". Es versteht sich, dass durch das Siebdruckverfahren auch beliebige andere Strukturen, Buchtstaben oder Markierungen aufgedruckt werden können.

Die Konturen des Schriftzugs "A b c" sind wieder bei allen Schaltzuständen des Funktionselements 5 dezent aber auch deutlich für das menschliche Auge zu erkennen.

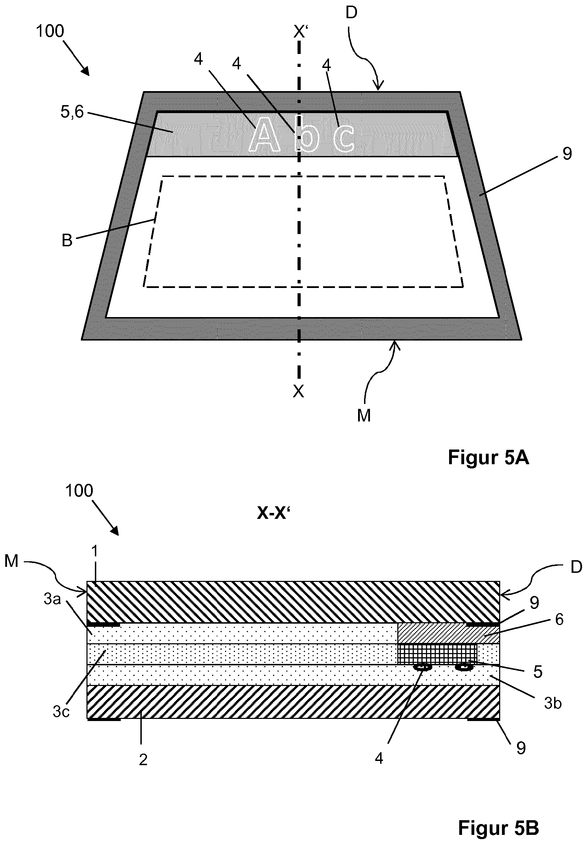

Figur 5A und Figur 5B zeigen je ein Detail einer alternativen erfindungsgemäßen Verbundscheibe 100 als Windschutzscheibe mit elektrisch steuerbarer Sonnenblende. Die Verbundscheibe 100 aus Figur 5A und 5B entspricht im Wesentlichen, der Verbundscheibe 100 aus den Figuren 4A und 4B, so dass im Folgenden nur auf die Unterschiede eingegangen wird.

Im Unterschied zur Verbundscheibe 100 aus Figur 4A und 4B ist der transparente Körper 4 nicht aufgedruckt, sondern er besteht aus beispielsweise drei Nylonfäden (Monofile) mit 100µm Dicke, die in Form der Konturen der Buchstaben "A", "b" und "c" zwischen der zweiten Zwischenschicht 3b und dem Funktionselement 5 eingelegt sind. Es versteht sich, dass durch das Einlegen eines Faden auch beliebige andere Konturen von Formen, Buchtstaben oder Markierungen eingebracht werden können. Es versteht sich weiterhin, dass der oder die Fäden auch zwischen der Innenscheibe 2 und der zweiten Zwischenschicht 3b, zwischen der Außenscheibe 1 und der ersten Zwischenschicht 3a, zwischen der ersten Zwischenschicht 3a und dem Funktionselement 5 oder gegebenenfalls zwischen allen vorhandenen Einzelschichten angeordnet sein könnten. Der transparente Körper 4 muss lediglich zumindest abschnittsweise innerhalb der orthogonalen Projektionsfläche des Funktionselements 5 durch die Verbundscheibe 100 angeordnet sein, um den gewünschten erfinderischen Effekt der Beeinflussung des Streuverhalten von Licht am Funktionselements 5 zu erzielen.

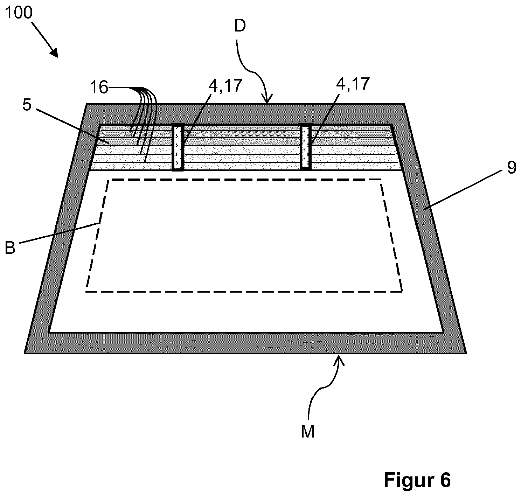

Figur 6 zeigt eine Draufsicht auf eine weitere Ausgestaltung einer erfindungsgemäßen Verbundscheibe 100 als Windschutzscheibe mit elektrisch steuerbarer Sonnenblende. Die Windschutzscheibe und das Funktionselement 5 als steuerbare Sonnenblende entsprechen im Wesentlichen der Ausführung aus der Figur 5A. Das PDLC-Funktionselement 5 ist allerdings durch horizontale Isolierungslinien 16 in sechs streifenartige Segmente aufgeteilt. Die Isolierungslinien 16 weisen beispielsweise eine Breite von 40 µm bis 50 µm und einen gegenseitigen Abstand von 3,5 cm auf. Sie sind mittels eines Lasers in die vorgefertigte Mehrschichtfolie eingebracht worden. Die Isolierungslinien 16 trennen insbesondere die Elektroden 12, 13 in voneinander isolierte Streifen, die jeweils über einen separaten elektrischen Anschluss verfügen. So sind die Segmente unabhängig voneinander schaltbar. Je dünner die Isolierungslinien 16 ausgeführt sind, desto unauffälliger sind sie. Mittels Ätzverfahren können noch dünnere Isolierungslinien 16 realisiert werden.

Durch die Segmentierung lässt sich die Höhe des abgedunkelten Funktionselements 5 einstellen. So kann der Fahrer abhängig vom Sonnenstand die gesamte Sonnenblende oder auch nur einen Teil davon abdunkeln. In der Figur ist angedeutet, dass die obere Hälfte der Sonnenblende abgedunkelt ist und die untere Hälfte transparent ist.

In einer besonders komfortablen Ausgestaltung wird das Funktionselement 5 durch eine im Bereich des Funktionselements 5 angeordnete kapazitive Schaltfläche 17 gesteuert, wobei der Fahrer durch den Ort, an dem er die Scheibe berührt, den Abdunklungsgrad festlegt. Im dargestellten Beispiel sind zwei transparente Körper 4 deckungsgleich zu zwei ebenfalls segmentierten, kapazitiven Schaltflächen 17 (beispielsweise zwei segmentierte, elektrisch leitfähige Streifen, die mit einer geeigneten Auswerteelektronik verbunden sind) angeordnet.

Alternativ kann das Funktionselement 5 auch durch kontaktfreie Verfahren, beispielsweise durch das Erkennen von Gesten, oder in Abhängigkeit des durch eine Kamera und geeignete Auswerteelektronik festgestellten Zustands von Pupille oder Augenlid gesteuert werden.

### Bezugszeichenliste:

- 1: Außenscheibe
- 2: Innenscheibe
- 3a: erste Zwischenschicht
- 3b: zweite Zwischenschicht
- 4: transparenter Körper
- 5: Funktionselement mit elektrisch steuerbaren optischen Eigenschaften
- 5.1,5.2,5.3,5.4: Seitenkante des Funktionselements 5
- 6: getönter Bereich der ersten Zwischenschicht 3a
- 9: Abdeckdruck
- 11: aktive Schicht des Funktionselements 5
- 12: Flächenelektrode des Funktionselements 5
- 13: Flächenelektrode des Funktionselements 5
- 14: Trägerfolie
- 15: Trägerfolie
- 16: Isolierungslinien
- 17: kapazitiver Sensor
- 100: Verbundscheibe

- A: Fläche des transparenten Körpers
- B: zentrales Sichtfeld der Windschutzscheibe
- D: Oberkante der Windschutzscheibe, Dachkante
- M: Unterkante der Windschutzscheibe, Motorkante
- X-X`: Schnittlinie
- Z: vergrößerter Bereich

## Patentansprüche

1. Verbundscheibe (100) mit Funktionselement (5) mit elektrisch steuerbaren optischen Eigenschaften, umfassend:
- eine laminierte Stapelfolge aus einer Außenscheibe (1), einer ersten Zwischenschicht (3a), einer zweiten Zwischenschicht (3b) und einer Innenscheibe (2) und
- ein Funktionselement (5) mit elektrisch steuerbaren optischen Eigenschaften, welches zumindest abschnittsweise zwischen der ersten Zwischenschicht (3a) und der zweiten Zwischenschicht (3b) angeordnet ist,
wobei zwischen der Außenscheibe (1) und dem Funktionselement (5) und/oder zwischen der Innenscheibe (2) und dem Funktionselement (5) abschnittsweise mindestens ein transparenter Körper (4) angeordnet ist, wobei der transparente Körper eine Transmission im Spektrum des sichtbaren Lichts von mehr als 30% aufweist,
der transparente Körper (4) vollständig innerhalb des Durchsichtbereichs des Funktionselements (5) durch die Verbundscheibe (100) angeordnet ist, und wobei der transparente Körper (4) eine transparente Faser und/oder eine im Siebdruck oder 3D-Druck aufgebrachte transparente Schicht enthält,
wobei die Fläche A des transparenten Körpers (4) kleiner oder gleich von 50%, bevorzugt kleiner oder gleich 25% und insbesondere kleiner oder gleich 10% der Fläche des Funktionselements (5) beträgt.

2. Verbundscheibe (100) nach Anspruch 1, wobei der transparente Körper (4) zwischen dem Funktionselement (5) und der ersten Zwischenschicht (3a) und/oder zwischen dem Funktionselement (5) der zweiten Zwischenschicht (3b) angeordnet ist und bevorzugt der transparente Körper (4) entweder zwischen dem Funktionselement (5) und der ersten Zwischenschicht (3a) oder zwischen dem Funktionselement (5) und der zweiten Zwischenschicht (3b) angeordnet ist und insbesondere unmittelbar benachbart zum Funktionselement (5) angeordnet ist.

3. Verbundscheibe (100) nach Anspruch 1 oder 2, wobei der transparente Körper (4) aus einer transparenten Faser besteht.

4. Verbundscheibe (100) nach Anspruch 3, wobei die Faser Polyethylenterephthalat (PET), Ethylenvinylacetat (EVA), Polyvinylbutyral (PVB), Polyurethan (PU), Polyamid, Polyimid oder Polyvinylidenfluorid enthält oder daraus besteht.

5. Verbundscheibe (100) nach Anspruch 1 oder Anspruch 2, wobei der transparente Körper (4) aus einer im Siebdruck oder 3D-Druck aufgebrachten transparenten Schicht besteht, bevorzugt aus Glas, Polymer oder Harz.

6. Verbundscheibe (100) nach einem der Ansprüche 1 bis 5, wobei der transparente Körper (4) klar ist oder eine Tönung oder eine Färbung aufweist, beispielsweise eine grüne, blaue oder rote Färbung.

7. Verbundscheibe (100) nach einem der Ansprüche 1 bis 6, wobei die Stapelfolge in einem Autoklavverfahren, einem Vakuumsackverfahren, einem Vakuumringverfahren, einem Kalanderverfahren, mittels Vakuumlaminatoren oder Kombinationen davon laminiert ist.

8. Verbundscheibe (100) nach einem der Ansprüche 1 bis 7, wobei die Dicke des transparenten Körpers (4) von 5 µm bis 500 µm, bevorzugt 25 µm bis 300 µm und besonders bevorzugt von 25 µm bis 150 µm beträgt.

9. Verbundscheibe (100) nach einem der Ansprüche 1 bis 8, wobei das Funktionselement (5) eine PDLC(polymer dispersed liquid crystal)-Folie ist.

10. Verfahren zur Herstellung einer Verbundscheibe nach einem der Ansprüche 1 bis 9, wobei zumindest
a) eine Außenscheibe (1), eine erste Zwischenschicht (3a), ein Funktionselement (5) mit elektrisch steuerbaren optischen Eigenschaften, eine zweite Zwischenschicht (3b) und eine Innenscheibe (2) in dieser Reihenfolge übereinander angeordnet werden, wobei zwischen Außenscheibe (1) und erster Zwischenschicht (3a), zwischen erster Zwischenschicht (3a) und Funktionselement (5), zwischen Funktionselement (5) und zweiter Zwischenschicht (3b) und/oder zwischen zweiter Zwischenschicht (3b) und Innenscheibe (2) mindestens ein transparenter Körper (4) angeordnet wird, und
b) die Außenscheibe (1) und die Innenscheibe (2) durch Lamination verbunden werden.

11. Verfahren nach Anspruch 10, wobei im Verfahrensschritt a) der transparente Körper (4) zwischen der ersten Zwischenschicht (3a) und dem Funktionselement (5) oder zwischen dem Funktionselement (5) und der zweiten Zwischenschicht (3b) angeordnet wird.

12. Verfahren nach Anspruch 10 oder 11, wobei im Verfahrensschritt b) die Lamination durch ein Autoklavverfahren, ein Vakuumsackverfahren, ein Vakuumringverfahren, ein Kalanderverfahren, mittels Vakuumlaminatoren oder ein daraus kombiniertes Verfahren durchgeführt wird.

13. Verwendung eines transparenten Körpers (4) in einer Verbundscheibe (100) nach einem der Ansprüche 1 bis 9 zur Beschriftung, zur Markierung oder zur symbolhaften Anzeige einer Funktion oder einer Position in der Verbundscheibe (100).

## Claims

1. Laminated pane (100) with a functional element (5) with electrically controllable optical properties, comprising:
- a laminated stack sequence composed of an outer pane (1), a first intermediate layer (3a), a second intermediate layer (3b), and an inner pane (2), and
- a functional element (5) with electrically controllable optical properties, which functional element is arranged, at least in sections, between the first intermediate layer (3a) and the second intermediate layer (3b),
wherein at least one transparent body (4) is arranged between the outer pane (1) and the functional element (5) and/or between the inner pane (2) and the functional element (5) in sections, wherein the transparent body has a transmittance in the visible light spectrum of more than 30%,
the transparent body (4) is arranged completely within the through-vision region of the functional element (5) through the laminated pane (100), and wherein
the transparent body (4) contains a transparent fiber and/or a transparent layer applied by screen printing or 3D printing,
wherein the area A of the transparent body (4) is less than or equal to 50%, preferably less than or equal to 25%, and in particular less than or equal to 10% of the area of the functional element (5).

2. Laminated pane (100) according to claim 1, wherein the transparent body (4) is arranged between the functional element (5) and the first intermediate layer (3a) and/or between the functional element (5) of the second intermediate layer (3b) and preferably the transparent body (4) is arranged either between the functional element (5) and the first intermediate layer (3a) or between the functional element (5) and the second intermediate layer (3b) and in particular is arranged immediately adjacent the functional element (5).

3. Laminated pane (100) according to claim 1 or 2, wherein the transparent body (4) consists of a transparent fiber.

4. Laminated pane (100) according to claim 3, wherein the fiber contains or is made of polyethylene terephthalate (PET), ethylene vinyl acetate (EVA), polyvinyl butyral (PVB), polyurethane (PU), polyamide, polyimide, or polyvinylidene fluoride.

5. Laminated pane (100) according to claim 1 or claim 2, wherein the transparent body (4) consists of a transparent layer applied by screen printing or 3D printing, preferably of glass, polymer, or resin.

6. Laminated pane (100) according to one of claims 1 through 5, wherein the transparent body (4) is clear or has a tint or a coloration, for example, a green, blue, or red coloration.

7. Laminated pane (100) according to one of claims 1 through 6, wherein the stack sequence is laminated in an autoclave method, a vacuum bag method, a vacuum ring method, a calender method, by means of vacuum laminators, or combinations thereof.

8. Laminated pane (100) according to one of claims 1 through 7, wherein the thickness of the transparent body (4) is from 5 µm to 500 µm, preferably 25 µm to 300 µm, and particularly preferably from 25 µm to 150 µm.

9. Laminated pane (100) according to one of claims 1 through 8, wherein the functional element (5) is a PDLC (polymer dispersed liquid crystal) film.

10. Method for producing a laminated pane according to one of claims 1 through 9, wherein at least
a) an outer pane (1), a first intermediate layer (3a), a functional element (5) with electrically controllable optical properties, a second intermediate layer (3b), and an inner pane (2) are arranged one above another in this order, wherein at least one transparent body (4) is arranged between the outer pane (1) and the first intermediate layer (3a), between the first intermediate layer (3a) and the functional element (5), between the functional element (5) and the second intermediate layer (3b), and/or between the second intermediate layer (3b) and the inner pane (2), and
b) the outer pane (1) and the inner pane (2) are joined by lamination.

11. Method according to claim 10, wherein in step a) the transparent body (4) is arranged between the first intermediate layer (3a) and the functional element (5) or between the functional element (5) and the second intermediate layer (3b).

12. Method according to claim 10 or 11, wherein in step b) the lamination is carried out by an autoclave method, a vacuum bag method, a vacuum ring method, a calender method, by means of vacuum laminators, or a method combined therefrom.

13. Use of a transparent body (4) in a laminated pane (100) according to one of claims 1 through 9 for inscribing, for marking, or for symbolically displaying a function or a position in the laminated pane (100).

## Revendications

1. Vitrage stratifié (100) avec un élément fonctionnel (5) aux propriétés optiques contrôlables électriquement, comprenant :
- une séquence d'empilage stratifié composée d'une vitre extérieure (1), d'une première couche intermédiaire (3a), d'une deuxième couche intermédiaire (3b) et d'une vitre intérieure (2), et
- un élément fonctionnel (5) aux propriétés optiques contrôlables électriquement, cet élément fonctionnel étant disposé, au moins en partie, entre la première couche intermédiaire (3a) et la seconde couche intermédiaire (3b),
dans lequel au moins un corps transparent (4) est disposé entre la vitre extérieure (1) et l'élément fonctionnel (5) et/ou entre la vitre intérieure (2) et l'élément fonctionnel (5) en sections, dans lequel le corps transparent a une transmittance dans le spectre de la lumière visible de plus de 30 %,
le corps transparent (4) est entièrement disposé dans la zone de vision directe de l'élément fonctionnel (5) à travers la vitrage stratifié (100), et dans lequel
le corps transparent (4) contient une fibre transparente et/ou une couche transparente appliquée par sérigraphie ou impression 3D,
dans lequel la surface A du corps transparent (4) est inférieure ou égale à 50 %, de préférence inférieure ou égale à 25 %, et en particulier inférieure ou égale à 10 % de la surface de l'élément fonctionnel (5).

2. Vitrage stratifié (100) selon la revendication 1, dans lequel le corps transparent (4) est disposé entre l'élément fonctionnel (5) et la première couche intermédiaire (3a) et/ou entre l'élément fonctionnel (5) de la seconde couche intermédiaire (3b) et de préférence le corps transparent (4) est disposé soit entre l'élément fonctionnel (5) et la première couche intermédiaire (3a) soit entre l'élément fonctionnel (5) et la seconde couche intermédiaire (3b) et en particulier est disposé immédiatement à côté de l'élément fonctionnel (5).

3. Vitrage stratifié (100) selon la revendication 1 ou 2, dans lequel le corps transparent (4) est constitué d'une fibre transparente.

4. Vitrage stratifié (100) selon la revendication 3, dans laquelle la fibre contient ou est constituée de polyéthylène téréphtalate (PET), d'éthylène-acétate de vinyle (EVA), de polybutyral de vinyle (PVB), de polyuréthane (PU), de polyamide, de polyimide ou de fluorure de polyvinylidène.

5. Vitrage stratifié (100) selon la revendication 1 ou la revendication 2, dans lequel le corps transparent (4) est constitué d'une couche transparente appliquée par sérigraphie ou impression 3D, de préférence en verre, en polymère ou en résine.

6. Vitrage stratifié (100) selon l'une des revendications 1 à 5, dans lequel le corps transparent (4) est clair ou présente une teinte ou une coloration, par exemple une coloration verte, bleue ou rouge.

7. Vitrage stratifié (100) selon l'une des revendications 1 à 6, dans laquelle la séquence d'empilage est stratifiée selon une méthode d'autoclave, une méthode de sac sous vide, une méthode d'anneau sous vide, une méthode de calandre, au moyen de lamineurs sous vide, ou des combinaisons de ceux-ci.

8. Vitrage stratifié (100) selon l'une des revendications 1 à 7, dans laquelle l'épaisseur du corps transparent (4) est comprise entre 5 µm et 500 µm, de préférence entre 25 µm et 300 µm, et de manière particulièrement préférée entre 25 µm et 150 µm.

9. Vitrage stratifié (100) selon l'une des revendications 1 à 8, dans laquelle l'élément fonctionnel (5) est un film PDLC (cristaux liquides dispersés dans un polymère).

10. Procédé de fabrication d'un vitrage stratifié selon l'une des revendications 1 à 9, dans lequel au moins
a) une vitre extérieur (1), une première couche intermédiaire (3a), un élément fonctionnel (5) aux propriétés optiques contrôlables électriquement, une deuxième couche intermédiaire (3b) et une vitre intérieur (2) sont disposés l'un au-dessus de l'autre dans cet ordre, dans lequel au moins un corps transparent (4) est disposé entre la vitre extérieure (1) et la première couche intermédiaire (3a), entre la première couche intermédiaire (3a) et l'élément fonctionnel (5), entre l'élément fonctionnel (5) et la deuxième couche intermédiaire (3b), et/ou entre la deuxième couche intermédiaire (3b) et la vitre intérieure (2), et
b) la vitre extérieur (1) et la vitre intérieur (2) sont assemblés par laminage.

11. Procédé selon la revendication 10, dans lequel à l'étape a) le corps transparent (4) est disposé entre la première couche intermédiaire (3a) et l'élément fonctionnel (5) ou entre l'élément fonctionnel (5) et la deuxième couche intermédiaire (3b).

12. Procédé selon la revendication 10 ou 11, dans lequel, à l'étape b), le laminage est effectué par une méthode d'autoclave, une méthode de sac sous vide, une méthode d'anneau sous vide, une méthode de calandre, au moyen de lamineurs sous vide, ou une méthode combinée de celles-ci.

13. Utilisation d'un corps transparent (4) dans un vitrage stratifié (100) selon l'une des revendications 1 à 9 pour inscrire, marquer ou afficher symboliquement une fonction ou une position dans le vitrage stratifié (100).
